# EUROPÄISCHE PATENTSCHRIFT

(11) **EP 4 289 228 B1**
(45) Veröffentlichungstag und Bekanntmachung des Hinweises auf die Patenterteilung: **18.11.2026**
(21) Anmeldenummer: 22701511.2
(22) Anmeldetag: 24.01.2022
(51) Int. Cl.: H05B 6/12, A47J 36/00

(54) **VORRICHTUNG ZUM AUSRICHTUNGSUNABHÄNGIGEN ERFASSEN DER TEMPERATUR DES BODENS EINES AUF EINEM KOCHFELD ANGEORDNETEN KOCHGESCHIRRS**
DEVICE FOR DETECTING THE TEMPERATURE OF THE BASE OF COOKWARE PLACED ON A HOB, INDEPENDENTLY OF THE ORIENTATION
DISPOSITIF DE DÉTECTION DE LA TEMPÉRATURE DE LA BASE D'UN USTENSILE DE CUISSON POSÉ SUR UNE TABLE DE CUISSON, INDÉPENDAMMENT DE L'ORIENTATION

(30) Priorität: 02.02.2021 AT 600352021
(43) Veröffentlichungstag der Anmeldung: 13.12.2023
(73) Patentinhaber: sensideon GmbH, 4600 Wels (AT)
(72) Erfinder: FACHBERGER, René, 4600 Wels (AT); KURZ, Hannes, 4600 Wels (AT)
(74) Vertreter: Hübscher & Partner Patentanwälte GmbH
(86) Internationale Anmeldenummer: PCT/AT2022/060020
(87) Internationale Veröffentlichungsnummer: WO 2022/165546

(56) Entgegenhaltungen:
- EP-A1- 3 914 042
- EP-A2- 0 883 327
- DE-A1- 19 828 170
- DE-A1- 4 439 095

## Beschreibung

### Technisches Gebiet

Die Erfindung bezieht sich auf eine Vorrichtung zum ausrichtungsunabhängigen Erfassen der Temperatur des Bodens eines auf einem Kochfeld angeordneten Kochgeschirrs, wobei ein im Boden des Kochgeschirrs angeordneter Sensor als Akustik-Oberflächenwellensensor ausgebildet und mit einem im Boden des Kochgeschirrs angeordneten, elektromagnetischen Koppler verbunden ist, der mit einem elektromagnetischen Koppler des Kochfeldes in Wechselwirkung steht.

### Stand der Technik

Im Stand der Technik existieren bereits Vorrichtungen zum Erfassen der Temperatur des Bodens eines auf einem Kochfeld angeordneten Kochgeschirrs.

Aus der EP 0 833 327 A2 ist eine Vorrichtung zur drahtlosen Ermittlung der Temperatur eines Kochgeschirrs bekannt, bei welcher ein Sensor im Boden des Kochgeschirrs integriert ist und eine Antenne zentral unter dem Kochgeschirr und zentral zur Strahlungsbeheizung liegt. Da sich die zentral angeordnete Antenne im Hauptabstrahlungsbereich des darunterliegenden Kochfeldes befindet, ist eine derartige Anordnung nicht für Induktionsheizungsfelder geeignet, da die in einem solchen Fall wirkenden Wirbelströme zu einer Beeinträchtigung der Übertragungsbedingungen der Antenne bzw. schlimmstenfalls zu deren Funktionsuntüchtigkeit führen können.

In der DE 198 28 170 A1 und der DE 44 39 095 A1 sind Kochgeschirre zur drahtlosen Temperaturregelung auf einem Herd offenbart, bei welcher ein Sensor entweder am Deckel des Kochgeschirrs oder an der Seitenwand des Kochgeschirrs mit einer Antenne im Herd in Wechselwirkung treten kann. Aus dieser Vorrichtung ergeben sich mitunter lange und/oder von der Anordnung des Kochgeschirrs abhängige Kommunikationswege.

In der US 20140098835 A1 weist der Kochgeschirrboden einen Temperatursensor auf, der mit einer in der Seitenwand bzw. im Stiel des Kochgeschirrs angeordneten Sensorantenne über eine Drahtleitung verbunden ist. Die Sensorantenne dient zur Funkübertragung der vom Temperatursensor erfassten Temperaturwerte an eine im Kochfeld angeordnete Leseantenne. Die erfassten Temperaturwerte können in weiterer Folge herangezogen werden, um den Kochprozess in Abhängigkeit der erfassten Temperaturen automatisiert, beispielsweise über eine entsprechende Steuer- und Regeleinheit, regeln zu können. Nachteilig ist an derartigen vorbekannten Vorrichtungen allerdings, dass die Qualität der Funkübertragung im Fernfeld zwischen der Sensorantenne im Kochgeschirr und der kochfeldseitigen Leseantenne maßgeblich von der relativen Drehausrichtung des am Kochfeld platzierten Kochgeschirrs abhängig ist. Folglich kann es je nach relativer Drehausrichtung des Kochgeschirrs zu Funkunterbrechungen und damit einhergehend zu einer fehlerhaften bzw. ausbleibenden Übertragung der Temperaturwerte kommen. Eine durchgehend stabile Funkübertragung während des Kochvorgags ist jedoch entscheidend, um die Grundvoraussetzung für eine zuverlässige automatisierte Regelung des Kochvorganges in Abhängigkeit der vom Kochgeschirr erfassten Temperaturen zu ermöglichen.

### Darstellung der Erfindung

Es besteht somit ein Bedarf an einer Vorrichtung der eingangs geschilderten Art, die trotz kompakter Bauweise ein ausrichtungsunabhängiges Erfassen der Temperatur des Bodens eines auf einem Kochfeld, insbesondere einem Induktionskochfeld, angeordneten Kochgeschirrs ermöglicht, um insbesondere die Voraussetzung für eine zuverlässige automatisierte Regelung des Kochprozesses in Abhängigkeit der erfassten Temperaturen zu schaffen.

Die Erfindung löst die gestellte Aufgabe dadurch, dass die größte vom elektromagnetischen Koppler des Kochfeldes aufgespannte Querschnittsfläche einen Metallanteil von weniger als 40 %, bevorzugt weniger als 30 %, noch bevorzugter weniger als 20 %, besonders bevorzugt weniger als 10% aufweist.

Der Erfindung liegt dabei die Überlegung zugrunde, dass der Übertragungsmechanismus zwischen Kochgeschirr und Kochfeld im Gegensatz zur üblicherweise stattfindenden Funkübertragung im Fernfeld auf einer induktiven oder kapazitiven Kopplung zwischen zwei elektromagnetischen Kopplern beruht. Dadurch werden stabilere Übertragungsbedingungen ermöglicht, die insbesondere unempfindlicher gegenüber beispielsweise bei Induktionskochfeldern auftretenden Wirbelströmen sind. Nachdem die elektromagnetischen Koppler damit aber dem Wirkfeld des Heizelements des Kochfeldes, insbesondere einem Induktionsheizelement, in unmittelbarer Nähe ausgesetzt sind, kann ein dauerhaft funktionsfähiger Betrieb der elektromagnetischen Koppler nur dann erfolgen, wenn gleichzeitig die größte Querschnittsfläche des Kopplers des Kochfeldes einen Metallanteil von weniger als 40 % aufweist. Somit kann das Verhältnis zwischen der in den elektromagnetischen Koppler eingebrachten zu der von diesem abführbaren Wärmeenergie auf einem dauerhaft funktionsfähigen Niveau gehalten werden. Folglich wird auch eine gemeinsame Anordnung des Kopplers und des passiven Sensors im hochtemperauturbelasteten Kochgeschirrboden überhaupt erst möglich, wodurch eine ausrichtungsunabhängige Erfassung der Temperatur erfolgen kann. Um den Wärmeeintrag in die elektromagnetischen Koppler zu reduzieren, können diese mit einem Hitzeschild versehen sein, das beispielsweise eine dünne, auf den jeweiligen Koppler aufgebrachte Schicht schlecht leitfähigen oder leitfähigen Materials, wie beispielsweise Metall oder Kohlenstoff, umfassen kann. Eine solche Schicht beeinflusst das elektromagnetische Feld bei entsprechender Auslegung nur äußerst gering, sodass erfindungsgemäß eine solche Schicht somit auch nicht in den Metallanteil der elektromagnetischen Koppler miteinzurechnen ist. Ein geeigneter kochgeschirrseitiger Koppler kann insbesondere als Flachantennenstruktur, beispielsweise als Inverted-F-Struktur, Kurz-Dipol, Kurz-Monopol, Kurz-Schleifenstruktur oder Microstrip-Antenne ausgeführt sein, während sich insbesondere Draht- bzw. Schleifenantennen bzw. Microstrip-Meander-Strukturen als kochfeldseitige Koppler eignen. Entscheidend ist in jedem Fall, dass die größte vom elektromagnetischen Koppler des Kochfeldes aufgespannte Querschnittsfläche je nach Leistung des Heizelements des Kochfeldes einen Metallanteil von weniger als 40 %, bevorzugt weniger als 30 % und besonders bevorzugt weniger als 20 % aufweist. Die aufgespannte Fläche bezeichnet dabei beispielsweise im Fall von Ringschleifenantennen die von der aufgespannten Ringschleife einschließlich des Antennenringes eingeschlossene Fläche. Zufolge dieser Maßnahmen ist die Eigenerwärmung der jeweiligen Koppler aufgrund von Wirbelströmen bzw. Wärmestrahlung und / oder -leitung, die durch das entsprechende Heizelement im Kochfeld verursacht werden, insoweit vernachlässigbar, als dass auch bei permanentem Energieeintrag durch ein Heizelement eine zuverlässige Erfassung und Übertragung der Temperaturen im Kochgeschirrboden langfristig ermöglicht wird, ohne dass die Koppler durch den Energieeintrag bzw. die hohen auftretenden Temperaturen beschädigt würden. Besonders günstige und energieeffiziente Übertragungsbedingungen ergeben sich, wenn kochgeschirrbodenseitig sowohl der Sensor als auch der elektromagnetische Koppler als passive Bauteile ausgeführt sind. Dadurch kann der Energieeintrag für die Übertragung ausschließlich durch den kochfeldseitigen Koppler erfolgen, indem dieser ein Abfragesignal an den Koppler im Boden des Kochgeschirrs sendet.

Die elektromagnetische Kopplung kann auch bei größeren Störeinflüssen zuverlässig aufrechterhalten werden, wenn der Boden des Kochgeschirrs einen Wellenleiter für die elektromagnetischen Koppler bildet. Durch geeignete Materialwahl, d.h. insbesondere durch einen ausreichend hohen Metallanteil, kann die Ausbreitung des elektromagnetsichen Feldes zwischen den beiden elektromagnetischen Kopplern im Bereich zwischen dem Boden des Kochgeschirrs und dem Kochfeld gehalten werden, sodass die Störanfälligkeit auch bei geringerer Feldleistung reduziert werden kann.

In diesem Zusammenhang ergeben sich besonders günstige Ausbreitungsbedingungen für das elektromagnetische Feld, wenn der Wellenleiter ein zum Kochfeld hin offenes Sackloch des Bodens des Kochgeschirrs ist, innerhalb dessen der elektromagnetische Koppler des Kochgeschirrs angeordnet ist. Auf diese Weise wird die Ausbreitung des elektromagnetischen Feldes nicht nur parallel zum Boden des Kochgeschirrs beschränkt, sondern auch quer dazu gebündelt, sodass sich besonders gute Koppeleigenschaften zwischen den elektromagnetischen Kopplern ergeben.

Die ausrichtungsunabhängige Temperaturerfassung kann weiter verbessert werden, wenn die beiden elektromagnetischen Koppler parallel zueinander und vorzugsweise auch parallel zum Boden des Kochgeschirrs angeordnet sind. Zufolge dieser Ausrichtung ergeben sich nicht nur besonders platzsparende Einbaubedingungen, sondern auch verbesserte elektromagnetische Kopplungseigenschaften.

Für besonders stabile Übertragungsbedingungen, die insbesondere unempfindlich gegen externe Störeinflüsse sind, empfiehlt es sich, dass die elektromagnetischen Koppler im wechselseitigen Nahfeld angeordnet sind. Obwohl eine Anordnung der beiden elektromagnetischen Koppler zueinander auch im strahlenden Nahfeld möglich ist, ergeben sich besonders günstige Übertragungsbedingungen, wenn die beiden elektromagnetischen Koppler zueinander im reaktiven Nahfeld angeordnet sind. Dadurch ergibt sich eine besonders effiziente Energieübertragung zwischen den elektromagnetischen Kopplern, sodass auch bei einer ungünstigen Ausrichtung der Koppler zueinander ausreichend Leistung am passiven Sensor zur Verfügung steht, damit von diesem ein auswertbares Antwortsignal empfangen werden kann.

Besonders günstige Übertragungsbedingungen ergeben sich zwischen den elektromagnetischen Kopplern, wenn wenigstens einer der elektromagnetischen Koppler vektorielle Feldanteile in zwei aufeinander normal stehende Raumrichtungen quer zur Ausbreitungsrichtung des elektromagnetischen Feldes bedingt. Dies bedeutet, dass das von diesem elektromagnetischen Koppler abgestrahlte Feld wenigstens quasi-zirkular ist.

Vor allem aufgrund vergleichsweise geringer baulicher Einschränkungen seitens des Kochfeldes empfiehlt es sich, den kochfeldseitigen Koppler zur weiteren Verbesserung der Übertagungsbedingungen entsprechend größer als den bodenseitig im Kochgeschirr angeordneten Koppler zu dimensionieren. Um vor diesem Hintergrund trotz der damit verbundenen höheren verfügbaren thermischen Masse dennoch eine hohe Lebensdauer des kochfeldseitigen Kopplers zu ermöglichen, wird vorgeschlagen, dass die größte aufgespannte Querschnittsfläche des elektromagnetischen Kopplers des Kochfeldes einen geringeren Metallanteil als der elektromagnetische Koppler des Kochgeschirrs aufweist, vorzugsweise einen Metallanteil von weniger als 10 %. Dadurch ergibt sich auch ein von der Leistung des Heizelements weitgehend unabhängiger Einsatz der erfindungsgemäßen Vorrichtung. Die größte aufgespannte Querschnittsfläche des elektromagnetischen Kopplers des Kochgeschirrs kann einen Metallanteil von weniger als 40 %, vorzugsweise weniger als 30 % und besonders bevorzugt weniger als 20 % aufweisen.

Zufolge der erfindungsgemäßen Merkmale kann der elektromagnetische Koppler des Kochfeldes bevorzugt in dem Bereich angeordnet werden, in dem auch das Kochgeschirr auf das Kochfeld aufgesetzt wird. Dies bedeutet, dass der elektromagnetische Koppler des Kochfeldes quer zur Ausbreitungsrichtung des elektromagnetischen Feldes im Bereich des Heizelementes des Kochfeldes angeordnet werden kann. Zufolge dieser Maßnahme ergeben sich unabhängig von der Platzierung des Kochgeschirrs auf dem Bereich des Heizelementes des Kochfeldes gute Übertragungsbedingungen.

Um die in den kochfeldseitigen elektromagnetischen Koppler eingetragenen Energiemenge zu reduzieren und gleichzeitig auch bei einem Verschieben des Kochgeschirrs an einen Randbereich des Heizelementes zuverlässig Sensorwerte erfassen zu können, wird vorgeschlagen, dass der elektromagnetische Koppler des Kochfeldes das Heizelement umschließt. Damit liegt die für die elektromagnetische Kopplung relevante Querschnittsfläche zwar im Bereich des Heizelementes, der Koppler des Kochfeldes kann aber außerhalb der unmittelbar von dem Heizelement abgegebenen Strahlungswärme angeordnet werden, was insbesondere im Fall von konventionellen Heizwendeln im Heizelement die mögliche Heizleistung erhöht und die Gefahr von Beschädigungen des elektromagnetischen Kopplers trotz eines höheren Metallanteils verringert.

Die Erfindung bezieht sich auch auf eine Sensoreinheit zum Einsetzen in den Boden eines Kochgeschirrs für eine erfindungsgemäße Vorrichtung. Dabei ist ein Akustik-Oberflächenwellensensor vorgesehen, der mit einem verbundenen elektromagnetischen Koppler für das Nahfeld in einem gemeinsamen Gehäuse angeordnet ist. Die elektromagnetischen Koppler können, wie zuvor bereits erwähnt, vorzugsweise als Flachantennenstruktur ausgebildet sein. Um darüber hinaus auch bei mehreren auf dem Kochfeld platzierten Kochgeschirren die erfassten Temperaturwerte eindeutig zuordnen zu können, wird vorgeschlagen, dass der Akustik-Oberflächenwellensensor eine auslesbare Identifikationskennung aufweist. Zur Befestigung des Gehäuses im Boden des Kochgeschirrs kann grundsätzlich vorgesehen sein, dass das Gehäuse mit einer entsprechenden Gehäuseaufnahme im Kochgeschirrboden mithilfe eines temperaturbeständigen Klebstoffs verklebt ist. Alternativ oder ergänzend dazu kann auch vorgesehen sein, dass das Gehäuse ein Außengewinde umfasst, sodass das Gehäuse über die ein Innengewinde aufweisende Gehäuseaufnahme mit dem Kochgeschirrboden verschraubt werden kann.

Um das in den Boden eines Kochgeschirrs eingesetzte Gehäuse permanent im Boden zu fixieren und insbesondere gegen ein unbeabsichtigtes Lösen zu sichern, wird vorgeschlagen, dass das ein Außengewinde aufweisendes Gehäuse an seiner Unterseite eine Profilausnehmung für ein Setzwerkzeug zum Einsetzen des Gehäuses in den Boden des Kochgeschirrs in einer Anzugsrichtung aufweist, wobei die Profilausnehmung derart ausgebildet ist, dass mit dem Setzwerkzeug ausschließlich ein Drehmoment in Anzugsrichtung in das Gehäuse eingeleitet wird. Die Profilausnehmung kann dabei als Profil im Sinne bekannter Sicherheitsschraubenköpfe, wie z.B. nach dem LocTec Standard, ausgebildet sein.

### Kurze Beschreibung der Erfindung

In der Zeichnung ist der Erfindungsgegenstand beispielsweise dargestellt. Es zeigen
- Fig. 1: eine schematische Seitenansicht einer erfindungsgemäßen Vorrichtung in einer Schnittdarstellung und
- Fig. 2: eine der Fig. 1 entsprechende teilaufgerissene Draufsicht.

### Wege zur Ausführung der Erfindung

Eine erfindungsgemäße Vorrichtung umfasst ein auf einem Kochfeld 1 angeordnetes Kochgeschirr 2. Im Boden 3 des Kochgeschirrs 2 ist ein passiver Sensor 4, sowie ein mit diesem verbundener elektromagnetischen Koppler 5 in einem gemeinsamen Gehäuse 6 angeordnet. Das Gehäuse 6 ist in eine Gehäuseaufnahme 7 im Boden 3 eingesetzt und mit dieser beispielsweise verschraubt. Dabei kann vorgesehen sein, dass das Gehäuse 6 ein Außengewinde und die Gehäuseaufnahme 7 ein entsprechendes Innengewinde aufweist. Um darüber hinaus das Gehäuse 6 insbesondere gegen ein unbeabsichtigtes Lösen zu sichern, kann das Gehäuse 6 an seiner Unterseite eine schematisch angedeutete Profilausnehmung 8 für ein Setzwerkzeug aufweisen. Die Profilausnehmung 8 ist dabei derart ausgebildet, dass mit dem Setzwerkzeug ausschließlich ein Drehmoment in Anzugsrichtung in das Gehäuse 6 eingeleitet wird.

Der elektromagnetische Koppler 5 des Kochgeschirrs 2 steht mit einem elektromagnetischen Koppler 9 des Kochfeldes 1 vorzugsweise in Nahfeld-Wechselwirkung, wobei der elektromagnetische Koppler 9 vorzugsweise quer zur Ausbreitungsrichtung des elektromagnetischen Feldes im Bereich eines Heizelements 10 des Kochfeldes 1, insbesondere eines Induktionsheizelements, angeordnet ist. Die vom Sensor 4 erfasste Temperatur des Bodens 3 kann folglich über eine induktive oder kapazitive Kopplung zwischen dem Koppler 5 des Kochgeschirrs 2 und dem Koppler 9 des Kochfeldes 1 übertragen werden. Besonders bevorzugt ist der passive Sensor 4 ein Akustik-Oberflächenwellensensor, der beispielsweise als Transponder ausgebildet sein kann.

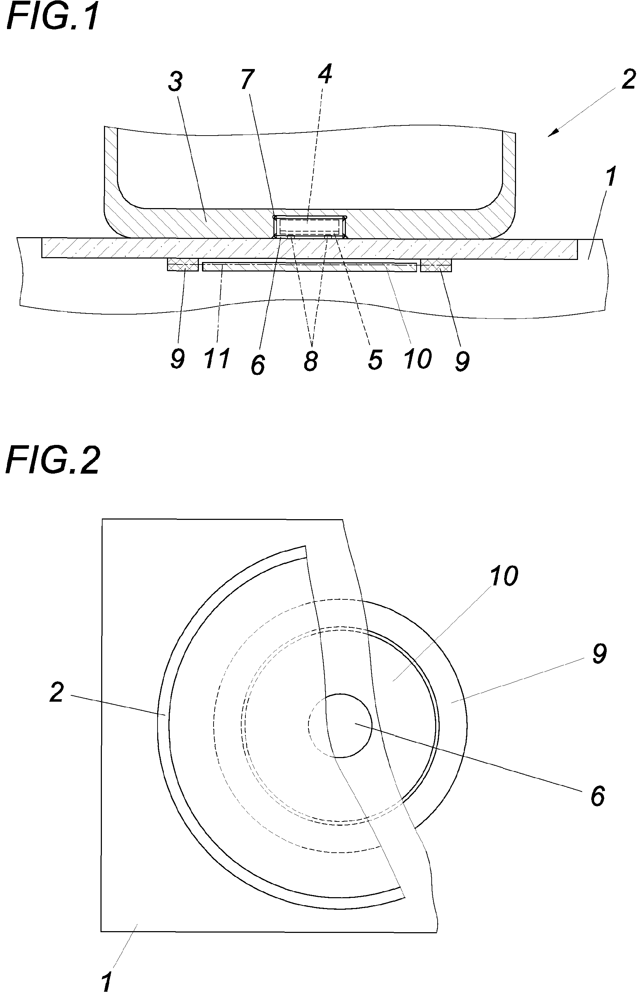

Damit der dem Wirkfeld des Heizelements 10 in unmittelbarer Nähe ausgesetzte elektromagnetische Koppler 9 des Kochfeldes 1 im Betrieb temperaturbedingt nicht beschädigt wird, sollte gleichzeitig die größte aufgespannte Querschnittsfläche des Kopplers 9 des Kochfeldes einen Metallanteil von weniger als 40 %, bevorzugt weniger als 30 %, noch bevorzugter weniger als 20 %, besonders bevorzugt weniger als 10% aufweisen. Zur besseren Veranschaulichung ist in der Fig. 1 die größte aufgespannte Querschnittsfläche des Kopplers 9 strichpunktiert angedeutet und mit dem Bezugszeichen 11 versehen. Wie dies in Fig. 1 und Fig. 2 schematisch angedeutet wird, können die beiden elektromagnetischen Koppler 5, 9 zur Verbesserung der ausrichtungsunabhängigen Temperaturerfassung parallel zueinander und vorzugsweise auch parallel zum Boden 3 des Kochgeschirrs 2 angeordnet sein. Die aufgespannte Fläche bezeichnet dabei im Fall des beispielhaft als Ringschleifenantenne ausgebildeten Kopplers 9 die von der aufgespannten Ringschleife einschließlich des Antennenringes eingeschlossene Fläche, wie dies aus Fig. 2 hervorgeht.

Wie dies ebenfalls insbesondere in Fig. 2 ersichtlich ist, kann der elektromagnetische Koppler 9 des Kochfeldes 1 das Heizelement 10 umschließen. Dadurch kann die in den kochfeldseitigen elektromagnetischen Koppler 9 eingetragene Energiemenge reduziert werden, wobei auch bei einem Verschieben des Kochgeschirrs 2 an einen Randbereich des Heizelementes 10 ein zuverlässiges Erfassen von Sensorwerten weiterhin möglich bleibt.

## Patentansprüche

1. Vorrichtung zum ausrichtungsunabhängigen Erfassen der Temperatur des Bodens (3) eines auf einem Kochfeld (1) angeordneten Kochgeschirrs (2), wobei ein im Boden (3) des Kochgeschirrs (2) angeordneter Sensor (4) als Akustik-Oberflächenwellensensor ausgebildet und mit einem im Boden (3) des Kochgeschirrs (2) angeordneten, elektromagnetischen Koppler (5) verbunden ist, der mit einem elektromagnetischen Koppler (9) des Kochfeldes (1) in Wechselwirkung steht, **dadurch gekennzeichnet, dass** die größte vom elektromagnetischen Koppler (9) des Kochfeldes (1) aufgespannte Querschnittsfläche einen Metallanteil von weniger als 40 % aufweist..

2. Vorrichtung nach Anspruch 1, **dadurch gekennzeichnet, dass** der Boden (3) des Kochgeschirrs (2) einen Wellenleiter für die elektromagnetischen Koppler (5, 9) bildet.

3. Vorrichtung nach Anspruch 2, **dadurch gekennzeichnet, dass** der Wellenleiter ein zum Kochfeld (1) hin offenes Sackloch des Bodens (3) des Kochgeschirrs (2) ist, innerhalb dessen der elektromagnetische Koppler (5) des Kochgeschirrs (2) angeordnet ist.

4. Vorrichtung nach einem der Ansprüche 1 bis 3, **dadurch gekennzeichnet, dass** die elektromagnetischen Koppler (5, 9) parallel zueinander angeordnet sind.

5. Vorrichtung nach einem der Ansprüche 1 bis 4, **dadurch gekennzeichnet, dass** die elektromagnetischen Koppler (5, 9) im wechselseitigen Nahfeld angeordnet sind.

6. Vorrichtung nach einem der Ansprüche 1 bis 5, **dadurch gekennzeichnet, dass** wenigstens einer der elektromagnetischen Koppler (5, 9) vektorielle Feldanteile in zwei aufeinander normal stehende Raumrichtungen quer zur Ausbreitungsrichtung des elektromagnetischen Feldes bedingt.

7. Vorrichtung nach einem der Ansprüche 1 bis 6, **dadurch gekennzeichnet, dass** der Koppler (9) des Kochfeldes (1) quer zur Ausbreitungsrichtung des elektromagnetischen Feldes im Bereich des Heizelementes (10) des Kochfeldes (1) angeordnet ist.

8. Vorrichtung nach Anspruch 7, **dadurch gekennzeichnet, dass** der Koppler (9) des Kochfeldes (1) das Heizelement (10) umschließt.

9. Sensoreinheit zum Einsetzen in den Boden (3) eines Kochgeschirrs (2) für eine Vorrichtung nach einem der vorangegangenen Ansprüche, **gekennzeichnet durch** einen Akustik-Oberflächenwellensensor (4), der mit einem verbundenen elektromagnetischen Koppler (5) für das Nahfeld in einem gemeinsamen Gehäuse (6) angeordnet ist.

10. Sensoreinheit nach Anspruch 9, **dadurch gekennzeichnet, dass** das ein Außengewinde aufweisendes Gehäuse (6) an seiner Unterseite eine Profilausnehmung (8) für ein Setzwerkzeug aufweist, wobei die Profilausnehmung (8) derart ausgebildet ist, dass mit dem Setzwerkzeug ausschließlich ein Drehmoment in Anzugsrichtung in das Gehäuse (6) eingeleitet wird.

## Claims

1. Device for orientation-independent detection of the temperature of the base (3) of a cooking vessel (2) arranged on a hob (1), wherein a sensor (4) arranged in the base (3) of the cooking vessel (2) is configured as a surface acoustic wave sensor and connected to an electromagnetic coupler (5) arranged in the base (3) of the cooking vessel (2), which electromagnetic coupler (5) interacts with an electromagnetic coupler (9) of the hob (1), **characterized in that** the largest cross-sectional area spanned by the electromagnetic coupler (9) of the hob (1) has a metal content of less than 40 %.

2. Device according to claim 1, **characterized in that** the base (3) of the cooking vessel (2) forms a waveguide for the electromagnetic couplers (5, 9).

3. Device according to claim 2, **characterized in that** the waveguide is a blind hole, open towards the hob (1), in the base (3) of the cooking vessel (2), within which the electromagnetic coupler (5) of the cooking vessel (2) is arranged.

4. Device according to any one of claims 1 to 3, **characterized in that** the electromagnetic couplers (5, 9) are arranged parallel to one another.

5. Device according to any one of claims 1 to 4, **characterized in that** the electromagnetic couplers (5, 9) are arranged in the near field of one another.

6. Device according to any one of claims 1 to 5, **characterized in that** at least one of the electromagnetic couplers (5, 9) produces vector field components in two mutually perpendicular spatial directions transverse to the direction of propagation of the electromagnetic field.

7. Device according to any one of claims 1 to 6, **characterized in that** the coupler (9) of the hob (1) is arranged transversely to the direction of propagation of the electromagnetic field in the region of the heating element (10) of the hob (1).

8. Device according to claim 7, **characterized in that** the coupler (9) of the hob (1) surrounds the heating element (10).

9. Sensor unit for insertion into the base (3) of a cooking vessel (2) for a device according to any one of the preceding claims, **characterized by** a surface acoustic wave sensor (4) which is arranged in a common housing (6) together with a connected electromagnetic coupler (5) for the near field.

10. Sensor unit according to claim 9, **characterized in that** the housing (6), which has an external thread, comprises on its underside a profiled recess (8) for a setting tool, wherein the profiled recess (8) is configured such that, by means of the setting tool, only a torque in the tightening direction is applied to the housing (6).

## Revendications

1. Dispositif permettant de mesurer la température du fond (3) d'un récipient de cuisson (2) placé sur une plaque de cuisson (1), indépendamment de son orientation, dans lequel un capteur (4) disposé dans le fond (3) du récipient de cuisson (2) est conçu comme un capteur à ondes acoustiques de surface et est relié à un coupleur électromagnétique (5) disposé dans le fond (3) du récipient de cuisson (2), lequel interagit avec un coupleur électromagnétique (9) de la plaque de cuisson (1), **caractérisé en ce que** la plus grande surface de section transversale couverte par le coupleur électromagnétique (9) de la plaque de cuisson (1) présente une teneur en métal inférieure à 40 %.

2. Dispositif selon la revendication 1, **caractérisé en ce que** le fond (3) du récipient (2) forme un guide d'ondes pour les coupleurs électromagnétiques (5, 9).

3. Dispositif selon la revendication 2, **caractérisé en ce que** le guide d'ondes est un trou borgne du fond (3) du récipient de cuisson (2), ouvert vers la plaque de cuisson (1), à l'intérieur duquel est disposé le coupleur électromagnétique (5) du récipient de cuisson (2).

4. Dispositif selon l'une des revendications 1 à 3, **caractérisé en ce que** les coupleurs électromagnétiques (5, 9) sont disposés parallèlement les uns aux autres.

5. Dispositif selon l'une des revendications 1 à 4, **caractérisé en ce que** les coupleurs électromagnétiques (5, 9) sont disposés dans le champ proche mutuel.

6. Dispositif selon l'une des revendications 1 à 5, **caractérisé en ce qu'**au moins l'un des coupleurs électromagnétiques (5, 9) génère des composantes vectorielles de champ dans deux directions spatiales perpendiculaires entre elles, transversalement à la direction de propagation du champ électromagnétique.

7. Dispositif selon l'une des revendications 1 à 6, **caractérisé en ce que** le coupleur (9) de la plaque de cuisson (1) est disposé transversalement à la direction de propagation du champ électromagnétique, dans la zone de l'élément chauffant (10) de la plaque de cuisson (1).

8. Dispositif selon la revendication 7, **caractérisé en ce que** le coupleur (9) de la plaque de cuisson (1) entoure l'élément chauffant (10).

9. Unité de capteur destinée à être insérée dans le fond (3) d'un récipient de cuisson (2) pour un dispositif selon l'une des revendications précédentes, **caractérisée par** un capteur à ondes acoustiques de surface (4) qui est disposé avec un coupleur électromagnétique (5) associé pour le champ proche dans un boîtier commun (6).

10. Unité de capteur selon la revendication 9, **caractérisée en ce que** le boîtier (6), qui présente un filetage extérieur, comporte sur sa face inférieure un évidement profilé (8) destiné à un outil de mise en place, l'évidement profilé (8) étant conçu de telle sorte que l'outil de mise en place ne transmette au boîtier (6) qu'un couple dans le sens du serrage.
